# EUROPEAN PATENT APPLICATION

(11) **EP 0 850 571 A2**
(43) Date of publication of application: **01.07.1998**
(21) Application number: 97830613.2
(22) Date of filing: 21.11.1997
(51) Int. Cl.: A23N 1/00

(54) **Juice extractor for fruit, in particular for bananas, papayas and tropical fruit in general**

(30) Priority: 26.11.1996 IT PR960045
(71) Applicant: SASIB FOOD S.p.A., I-43100 Parma (IT)
(72) Inventor: Vignoli, Luigi, 43022 Montechiarugolo (Parma) (IT)
(74) Representative: Gotra, Stefano

(57) **Abstract**

The invention falls within the sector relating to the extraction of juice and pulp from fruit, in particular bananas.

The extractor (1) comprises a screw (5) rotating snugly inside a cylindrical sieve (4) enclosed by an external casing (2), the product to be processed being introduced into said screw; a counter-pressure device (8) located at the end of the screw and the sieve opposite to the end where the product to be processed enters and provided with means (8, 9) formed so as to be able to close with adjustable pressure said end of the screw (5) and the sieve (4) through which the waste matter emerges.

## Description

The present invention relates to a juice extractor for fruit, in particular for bananas, papayas and tropical fruit in general.

Various devices for the extracting fruit juice and pulp are known, which perform crushing of the fruit followed by a heating operation designed to facilitate subsequent separation of the useful part from the waste matter, through a sieve of a strainer.

Heating, however, is the cause of a deterioration in quality of the product.

In the case of cold extraction of juice, the main problem consists in the need to find a compromise between holes in the sieve which are too small, thereby not allowing complete extraction of the juice and hence resulting in a low efficiency, and holes which are too large and which, although they improve the degree of extraction, require an additional processing operation in order to eliminate the waste matter.

Industrial Patent IT 1199392 discloses a rotary machine for extracting juices and pulp from tomatoes and fruit, which uses a vaned rotor with vanes inclined at an angle greater than 90° with respect to the plane tangent to the sieve at each vane and in the direction of movement. The rotor rotates inside a perforated sheet-metal strainer for separating the juice, which passes through the sieve and is collected in an external hopper, from the waste matter which is expelled from a special opening.

This extractor, however, is not suitable for the extraction of juice from tropical fruit and in particular from bananas.

The latter, in fact, consist of different types depending on the variety and the geographical zone from where they are obtained.

In fact, it is particularly difficult to extract juice from bananas which are small in size and have thin skins. At present the juice extractors for bananas comprise two rotating cylindrical sieves which are arranged parallel and substantially adjacent to one another and between which the product is made to fall. The juice passes through the holes and enters into the cylindrical sieves, while the waste matter is collected at the bottom. However, this extractor also has the same drawbacks already mentioned above.

The object of the present invention is to eliminate the abovementioned drawbacks and provide an extractor which is able to obtain juice from tropical fruit and bananas of any variety with a high efficiency and constructional simplicity of the extractor itself.

Said objects are fully achieved by the extractor according to the present invention, which is characterized by the contents of the claims indicated below and in particular by the fact that it comprises in combination:
- a screw rotating snugly inside a cylindrical sieve enclosed by an external casing, the product to be processed being introduced into said screw;
- a counter-pressure device located at the end of the screw and the sieve opposite the end where the product to be processed enters and provided with means formed so as to be able to close with adjustable pressure said end of the screw and the sieve through which the waste matter emerges.

The counter-pressure devices comprise preferably a disc closing the end of the sieve opposite that for entry of the product, said disc being acting on by one or more pneumatic pistons, the pressure of which is adjustable by means of a pneumatic reducer.

The screw is preferably of the type with a constant pitch and diameter and, at the supply end, has an additional turn phase-displaced by 180 with respect to the main turn and extending over a single revolution, namely the screw is of the so-called type with a 180 double thread for the first pitch.

These and other characteristic features will emerge more clearly from the following description of a preferred embodiment illustrated, purely by way of a non-limiting example, in the accompanying illustrative plate, in which:

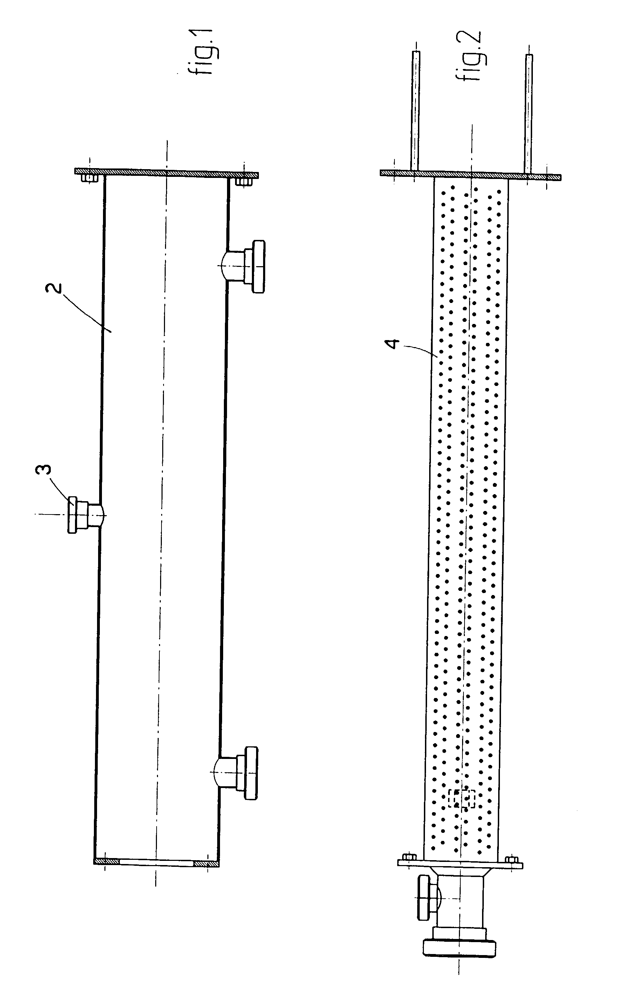

- Figure 1 shows a partially sectioned view of the cylindrical external casing of the extractor;
- Figure 2 shows a view, similar to that of Figure 1, of the sieve of the extractor;
- Figure 3 shows a view, similar to that of Figure 1, of the screw of the extractor;
- Figure 4 shows a view, similar to that of Figure 1, of the entire extractor;
- Figure 5 shows a detail of the shape of the holes in the sieve.

With reference to the Figures, 1 denotes in its entirety a juice and pulp extractor comprising a cylindrical external casing 2 which is flanged at its ends and has a side outlet mouth 3 through which the juice or the extracted pulp emerges.

The casing 2 houses internally a sieve 4 in the form of perforated cylindrical metal sheet with holes 13 having a diameter of about 5 mm inside the sieve and formed outwardly flared up to a diameter of about 9 mmn on the external surface of the sieve, as illustrated in Figure 5.

The metal sheet forming the sieve has a thickness of about 3 mm.

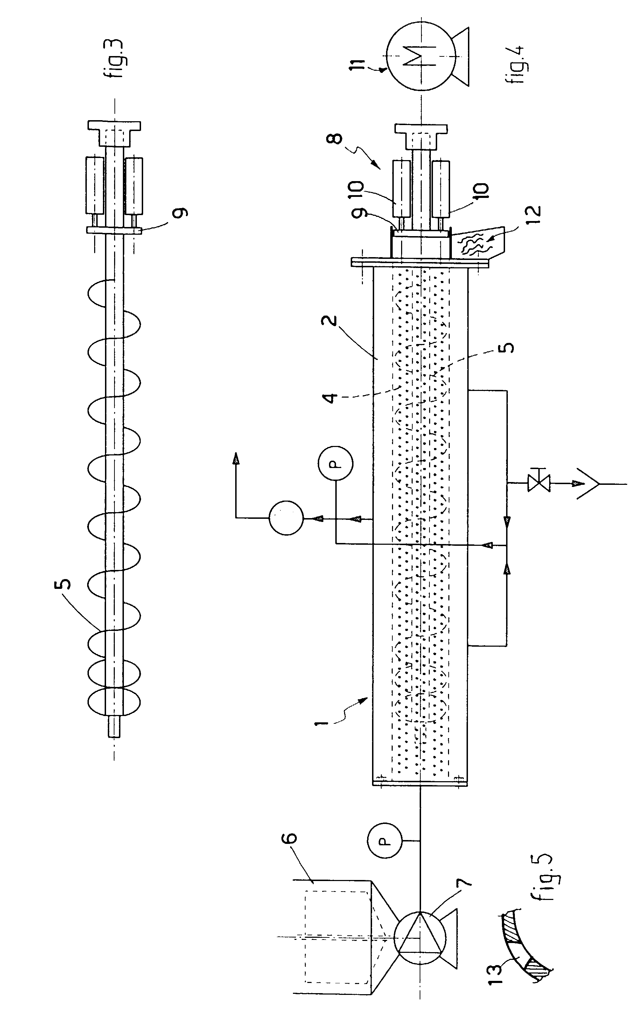

The sieve houses internally a screw 5 of the type with a double thread for the first pitch phase-displaced by 180 (as illustrated in Figure 3), with a pitch of the turn equal to about 140 mm.

Basically, in the entry zone of the screw there is an additional turn which extends over a single revolution and is phase-displaced by 180° with respect to the main turn.

The screw is of the type with a constant pitch and diameter.

The product is supplied into a hopper 6 provided with a breaking bridge and descends from the latter towards a pump 7 which conveys it into the screw 5 which is driven in rotation by a drive system 11 of the known type so that the screw rotates in a clockwise direction at a speed of about 90 revolutions per minute.

The rotation of the screw causes forward feeding of the product inside it and simultaneous extraction of juice through the holes of the sieve.

The juice then ends up inside the external casing and flows out through the outlet mouth 3.

The end of the sieve opposite to the end where the product enters is provided with a counter-pressure device denoted in its entirety by 8 and consisting of a closing disc 9 which is acted on by four pneumatic pistons 10, only two of which are shown and which have the function of regulating the pressure of the disc 9 against the product so as to adjust both the degree of extraction of the juice through the holes of the sieve and the extraction of the waste or reject matter 12 in the vicinity of the disc 9 itself. The disc 9 and the pneumatic pistons 10 constitute means formed so as to be able to close with adjustable pressure the end of the screw and the sieve through which the waste matter emerges.

Each of the ends of the screw 5 terminates in a pin: one pin is kinematically connected to the drive system 11, while the other one rotates idly inside a bush, not shown, which acts as a support for centring the screw itself inside the sieve.

The present extractor is particularly suitable for extracting juice from bananas which are small in size and have thin skins and from papayas and tropical fruit in general and provides an efficiency of between 80% and 90%.

In the present extractor the combination of the screw rotating in the sieve with the counter-pressure device positioned at the end of the screw is particularly effective.

The pneumatic pistons 10 are adjustable by means a pneumatic reducer so as to provide a variable pressure on the disc 9, depending on the characteristics of the product. The screw 5, the helix of which lightly touches the inside wall of the sieve, also performs a cleaning action on the inside wall of the sieve, so as to prevent blockage thereof.

The juice extraction efficiency therefore depends on the simultaneous adjustment of the speed of the screw and the pressure exerted on the disc 9.

## Claims

1. Juice extractor for fruit, in particular for bananas, papayas and tropical fruit in general, of the type comprising at least one inlet for the product, one outlet for the juice or pulp and one outlet for the waste or reject matter, characterized in that it comprises in combination:
- a screw (5) rotating snugly inside a cylindrical sieve (4) enclosed by an external casing (2), the product to be processed being introduced into said screw;
- a counter-pressure device (8) located at the end of the screw and the sieve opposite the end where the product to be processed enters and provided with means (8, 9) formed so as to be able to close with adjustable pressure said end of the screw (5) arid the sieve (4) through which the waste matter emerges.

2. Extractor according to Claim 1, in which the counter-pressure device (8) comprises a disc (9) closing the end of the sieve (4) opposite that for entry of the product, said disc being acting on by one or more pneumatic pistons (10), the pressure of which is adjustable by means of a pneumatic reducer.

3. Extractor according to Claim 1, in which the screw (5) is of the type with a constant pitch and diameter and has an additional turn phase-displaced by 180° with respect to the main turn and extending over a single revolution, namely the screw is of the so-called type with a 180 double thread for the first pitch.

4. Extractor according to Claim 1, in which the sieve (4) is provided with a plurality of holes outwardly flared so that the diameter of the holes on the internal surface of the sieve is less than the diameter of the holes on the external surface of the sieve.

5. Extractor according to Claim 4, in which the diameter of these holes is about 5 mm on the internal surface of the sieve and is about 9 mm on the external surface of the sieve.

6. Extractor according to Claim 1, characterized in that it comprises a hopper (6) for supplying the product, provided with a breaking bridge and formed so as to convey the product towards a pump (7) which conveys the incoming product to the screw (5).

7. Plant for extracting juice from fruit, in particular bananas, characterized in that it uses an extractor according to any one of the preceding claims.

8. Fruit juice, in particular banana juice, obtained by means of use of an extractor according to any one of the preceding claims.
